# EUROPÄISCHE PATENTANMELDUNG

(11) **EP 1 396 657 A1**
(43) Veröffentlichungstag der Anmeldung: **10.03.2004**
(21) Anmeldenummer: 03020026.5
(22) Anmeldetag: 03.09.2003
(51) Int. Cl.: F16F 15/16

(54) **Elastische Kupplung, insbesondere Zweimassenschwungrad für eine Brennkraftmaschine**

(30) Priorität: 03.09.2002 DE 10241103
(71) Anmelder: Voith Turbo GmbH & Co. KG, 89522 Heidenheim (DE)
(72) Erfinder: Polifke, Gregor, Dr., 89537 Giengen (DE); Hartleitner, Armin, 89446 Ziertheim (DE); Kovacevic, Miroslav, 89522 Heidenheim (DE)
(74) Vertreter: Dr. Weitzel & Partner

(57) **Zusammenfassung**

Die Erfindung betrifft eine elastische Kupplung in Scheibenbauweise, insbesondere ein Torsionsschwingungsdämpfungssystem für eine Brennkraftmaschine, mit den folgenden Merkmalen:
- eine erste Kupplungshälfte (1) umfasst zwei am Außenumfang drehfest verbundene Seitenscheiben (1.1,1.2);
- eine zweite Kupplungshälfte (2) ist durch mindestens eine einer Nabe zugeordnete Scheibe (Mittelscheibe) gebildet, die zwischen den Seitenscheiben (1.1,1.2) von diesen umhüllt angeordnet ist;
- beide Kupplungshälften (1,2) sind begrenzt gegeneinander verdrehbar und über elastische Kupplungselemente (4) miteinander verbunden;
- die Seitenscheiben (1.1,1.2) begrenzen einen die Mittelscheibe aufnehmenden, flüssigkeitsdichten Innenraum;
- im radial äußeren Bereich des Innenraumes befindet sich wenigstens eine mit Dämpfungsmedium füllbare und eine Drosselöffnung aufweisende Dämpfungskammer;
- die Dämpfungskammer ist in Umfangsrichtung begrenzt durch erste Nocken (2.3), die der einen Kupplungshälfte zugeordnet sind, sowie durch einen zweiten Nocken (1.5), der der anderen Kupplungshälfte zugeordnet ist;
- der zweite Nocken (1.5) unterteilt die Dämpfungskammer in zwei Teilkammern (6.1,6.2), deren Volumina sich beim gegenseitigen Verdrehen der Kupplungshälften abwechselnd derart verändern, dass sich das Volumen der einen Teilkammer vergrößert, während sich das Volumen der anderen Teilkammer verkleinert;
- wenigstens einer (1.5) der Nocken ist in ein feststehendes Nockenteil (1.5.1) und ein in Umfangsrichtung verschiebbares, die betreffende Teilkammer (6.1) begrenzendes Nockenteil (1.5.2) unterteilt;
- das in Umfangsrichtung verschiebbare Nockenteil ist entgegen der Kraft einer Feder (1.5.3) verschiebbar;
- zwischen den beiden Nockenteilen ist eine dritte Teilkammer (6.3) der Dämpfungskammer gebildet, die die Feder (1.5.3) aufnimmt;
- das verschiebbare Nockenteil ist als Federtopf ausgebildet.

Die Erfindung ist gekennzeichnet durch das folgende Merkmal:
- das verschiebbare Nockenteil (1.5.2) ist am feststehenden Nockenteil (1.5.1) gelagert.

## Beschreibung

Die Erfindung betrifft eine elastische Kupplung, insbesondere für ein Torsionsschwingungsdämpfungssystem für eine Brennkraftmaschine gemäß dem Oberbegriff des Anspruches 1.

Eine Kupplung dieser Gattung ist aus der DE-PS 28-48 748 bekannt.

US 55 73 460 zeigt und beschreibt eine elastische Kupplung in Scheibenbauweise, umfassend zwei Kupplungshälften, die begrenzt gegeneinander verdrehbar und über elastische Kupplungselemente miteinander verbunden sind. Im radial äußeren Bereich eines Innenraumes befinden sich Dämpfungskammern, die mit einem Dämpfungsmedium füllbar sind. Eine weitere, ähnliche Kupplung ist aus DE 28 48 748 bekannt geworden.

Kupplungen der genannten Art haben die Aufgabe, die Laufruhe von Antrieben mit Brennkraftmaschinen, insbesondere in Fahrzeugen, in allen Betriebs- und Drehzahlbereichen sicherzustellen. Insbesondere sollten störende Torsionsschwingungen vom Antriebsstrang ferngehalten werden.

Die Elastizität der Kupplung ist so gewählt, dass die kritische Drehzahl des aus Motor und Getriebe bestehenden Massensystems genügend weit unterhalb des Betriebsbereichs liegt. Dabei sollen beim Durchfahren der kritischen Drehzahl keine zu großen Amplituden und Torsionsmomente in den Antriebselementen entstehen. Wesentlichen Beitrag dazu leistet eine auf den Antriebsstrang abgestimmte Dämpfungseinrichtung in der Kupplung selbst, nämlich eine hydraulische Dämpfung durch Verdrängung von Dämpfungsmedium durch definierte Spalte. Das Problem dabei ist, dass je nach Motortyp (Otto-Motor, Diesel-Motor) oder Zylinderzahl bzw. Zylinder-Anordnung (Reihenmotor, V-Motor ) oder auch Getriebe ein unterschiedliches Drehschwingungsverhalten vorliegt.

Während sich die Federbestückung der Kupplung in erster Linie nach der Höhe des zu übertragenden Drehmomentes richtet, lässt sich die parallelgeschaltete Dämpfungseinrichtung in kritischen Anwendungsfällen nicht variabel genug einstellen. Es hat sich unter anderem gezeigt, dass bei großen relativen Verdrehwinkeln viel Dämpfungsmedium unkontrolliert über Axialspalte ins Innere der Kupplung entweicht, ohne wesentlich zur Dämpfung beizutragen.

Zur Gattung der Erfindung gehört ferner eine aus dem DE-GM 88 08 004 bekannte Kupplung in Scheibenbauweise, bei der die eine Kupplungshälfte die andere unter Bildung eines flüssigkeitsdichten und mit Dämpfungsmedium füllbaren Innenraumes einschließt. Es sind Dämpfungskammern mit Drosselspalten angeordnet, und die innenliegenden Scheiben sind am äußeren Umfang durch Trennwände abgeteilt, zwischen welche radiale Flächen an den Scheiben nach einem bestimmten Verdrehwinkel eintauchen. Dadurch wird eine den Belastungszuständen der Kupplung besser anpassbare Dämpfung von Drehschwingungen erzielt, insbesondere eine bessere Anpassung an die Leerlaufund Vollast-Bedingungen des Motors.

Bei manchen Betriebszuständen von Antriebssträngen kommt es zum Verschleiß oder zu Beschädigungen von einzelnen Bauteilen. So ist es bekannt, dass Beschädigungen der Federn des Federpaketes dadurch auftreten, dass die Federn "auf Block gehen", d.h., dass die Federwindungen unter hohen Drücken zum gegenseitigen Anliegen kommen, was zu Verformungen führt. Auch ein hartes gegenseitiges Anschlagen jener Nockenflächen, die die Dämpfungskammern in Umfangsrichtung begrenzen, kann zu Schäden führen. Dieser Gefahr könnte man zwar dadurch entgegenwirken, dass man die Federn des Federpaketes steifer macht. Dies ist jedoch deshalb unerwünscht, weil man generell eine weiche Federcharakteristik anstrebt, um die Resonanzfrequenz der Kupplung möglichst weit abzusenken.

Eine hervorragende Lösung dieses Problems ist in EP 0 922 881 A2 beschrieben.

Gleichwohl ist es wünschenswert, eine solche Kupplung baulich zu vereinfachen, so dass sie rationell und kostengünstig hergestellt werden kann.

Der Erfindung liegt somit die Aufgabe zugrunde, eine Kupplung gemäß dem Oberbegriff von Anspruch 1 derart zu gestalten, dass sie leichter, rationeller und kostengünstiger hergestellt werden kann, als die bisher bekannten Kupplungen, dass sie aber gleichwohl ihre Funktionen als Kupplung erfüllen.

Demgemäß wird das verschiebbare Nockenteil, das zusammen mit dem feststehenden Nockenteil die dritte Teilkammer der Dämpfungskammer bildet, am feststehenden Nockenteil gelagert, nicht aber an den beiden Seitenscheiben.

Eine solche Lagerung lässt sich sehr leicht verwirklichen. Im einfachsten Falle könnte sie beispielsweise wie folgt ausgeführt sein: Der bewegliche Nockenteil, der zugleich als Federtopf ausgebildet ist, ist von einem Stab getragen, der in eine Bohrung in dem beweglichen Nockenteil eintaucht und in dieser Bohrung dann gleitet, wenn der gegenseitige Abstand der beiden Nockenteile bei der Kupplungsarbeit verändert wird.

Die Erfindung ist anhand der Zeichnung näher erläutert. Darin ist im einzelnen folgendes dargestellt:
- Figur 1: zeigt einen schematischen Teil-Querschnitt senkrecht zur Achse einer Kupplung.
- Figur 2: zeigt einen Zylinderschnitt A - A von Figur 1.
- Figur 3: zeigt eine weitere Kupplung wiederum in einem schematischen Teilquerschnitt senkrecht zur Achse.
- Figur 4: zeigt einen Zylinderschnitt A - A von Figur 3, wobei statt des Nockens 1.5 nach Figur 3 eine Nocken 1.5.10 nach Figur 14 dargestellt ist.
- Figur 5: zeigt einen mit dem Gehäuse fest verbundenen Nocken mit Feder.
- Figur 6: zeigt eine Variante der Ausführungsform gemäß Figur 5 in einer ersten Position.
- Figur 7: zeigt den Gegenstand von Figur 6 in einer zweiten Position.
- Figur 8: zeigt einen Ausschnitt aus einer Kupplung in einer schematischen, achssenkrechten Ansicht.
- Figur 9: zeigt den Gegenstand von Figur 8 in einer Abwicklung.
- Fig. 10 - 13: zeigen verschiedene Varianten eines in der Dämpfungskammer angeordneten Schwimmers.
- Fig. 14: zeigt in einer Ausschnittansicht einen Nocken, der dem Gehäuse zugeordnet ist.
- Fig. 15: zeigt eine weitere Ausführungsform einer erfindungsgemäßen Einrichtung in der Abwicklung
- Figur 16: zeigt eine weitere Ausführungsform, wiederum in der Abwicklung.
- Figur 17: zeigt einen besonders gestalteten Schwimmer.
- Figur 18: zeigt den Schwimmer gemäß Figur 17 in eingebautem Zustand.

Bei dem dargestellten Ausführungsbeispiel wurde eine Kupplung dargestellt, bei der ein Schwimmer vorgesehen ist, der im Innenraum zwischen den beiden Seitenscheiben zusätzlich eingefügt ist und der gegenüber den beiden Kupplungshälften jeweils begrenzt verdrehbar ist. Hierauf soll noch im einzelnen eingegangen werden.

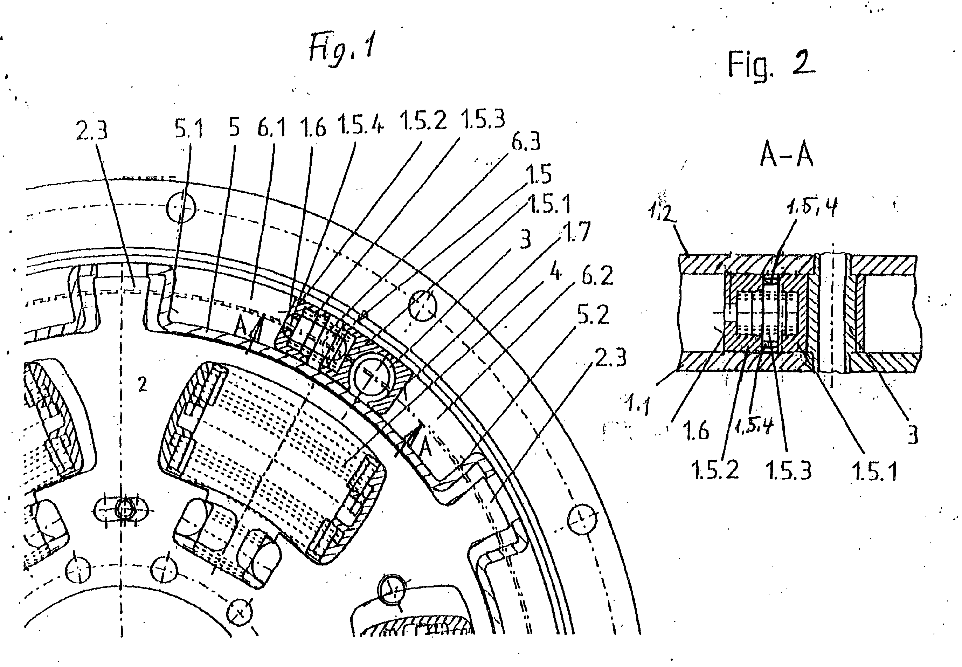

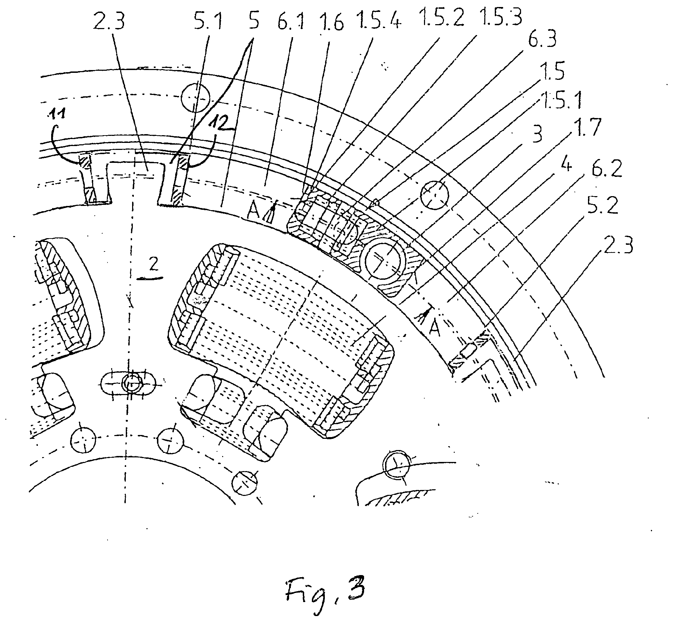

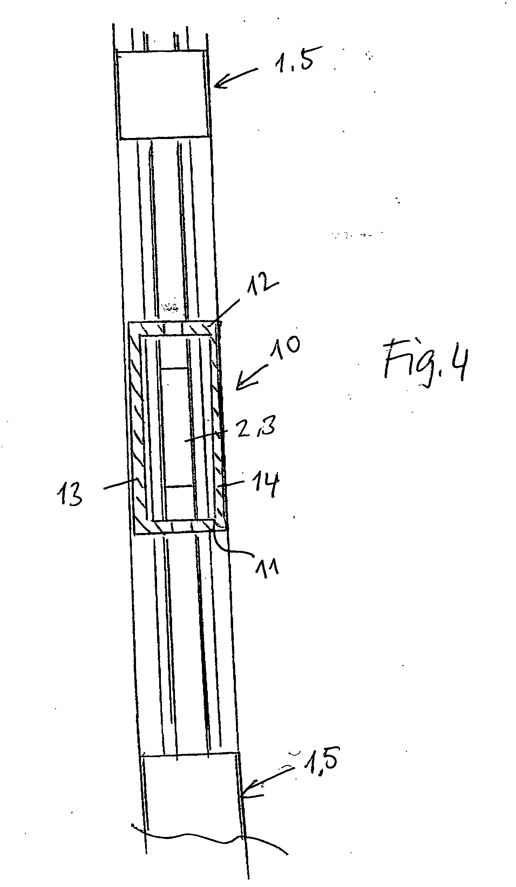

Im einzelnen erkennt man aus den Figuren 1 und 2 die folgenden Bauteile:

Die Primärhälfte 1 der Kupplung umfasst zwei Seitenscheiben 1.1 und 1.2, ferner zwei Gehäuseteile 1.3, 1.4, die die genannten Seitenscheiben umschließen.

Zwischen den beiden Seitenscheiben 1.1, 1.2 ist eine Mittelscheibe 2 vorgesehen. Diese Mittelscheibe kann aus zwei oder mehreren Einzelscheiben zusammengefügt sein. Diese bildet einen wichtigen Teil der Sekundärhälfte der Kupplung. Die Mittelscheibe 2 weist an ihrem Außenumfang eine Mehrzahl von Nocken 2.3 auf.

Man erkennt ferner eine Distanz- und Zentrierbuchse 3. Diese ist in achsparalleler Richtung im Umfangsbereich durch die gesamte Einheit hindurchgeführt und mittels geeigneter Verbindungstechniken (zum Beispiel Schweißen) oder Verbindungsmittel (zum Beispiel Schrauben, Nieten) fixiert. Es versteht sich, dass über den Umfang der gesamten Kupplung hinweg eine Mehrzahl solcher Distanzund Zentrierbuchsen sowie zugehörende Verbindungsmittel vorgesehen sind.

Insbesondere aus Figur 1 ist ferner ein Federpaket 4 erkennbar. Es sind mehrere solcher Federpakete über den Umfang der Kupplung verteilt angeordnet.

Die Distanz- und Zentrierbuchse 3 trägt einen Nocken 1.5, der Bestandteil der ersten Kupplungshälfte 1 ist. Nocken 1.5 umfasst einen feststehenden Teil 1.5.1 sowie einen in Umfangsrichtung beweglichen Teil 1.5.2. Zwischen den beiden Nockenteilen 1.5.1 und 1.5.2 befindet sich eine Zusatzfeder 1.5.3. Diese hat das Bestreben, die beiden Nockenteile auseinander zu drücken. Diese Zusatzfeder bringt eine zusätzliche Kraft im Endbereich der gegenseitigen Verdrehung der beiden Kupplungshälften 1, 2 auf.

Man erkennt weiterhin den Schwimmer 5. Dieser ist axial im Zwischenraum zwischen den beiden Seitenscheiben 1.1, 1.2 angeordnet. In radialer Richtung befindet er sich radial außerhalb der Mittelscheibe 2. Wie aus Figur 1 erkennbar, weist er Anschlagflächen 5.1 und 5.2 auf, die an die Kontur der Anschlagflächen 1.6 und 1.7 angepasst sind.

Nocken 1.5 ist ebenfalls mit Anschlagflächen versehen. Man erkennt die Anschlagfläche 1.6 des beweglichen Nockenteiles sowie die Anschlagfläche 1.7 des feststehenden Nockenteiles.

Zwischen den beiden Anschlagflächen 5.1 und 1.6 ist eine Teil-Dämpfungskammer (Teilkammer) 6.1 begrenzt und zwischen den Anschlagflächen 1.7 und 5.2 eine Teil-Dämpfungskammer (Teilkammer) 6.2.

Beim Betrieb der Kupplung findet in bekannter Weise eine begrenzte relative Verdrehung der beiden Kupplungshälften 1 und 2 statt. Diese hat zur Folge, dass die Teilkammern 6.1 und 6.2 zyklisch vergrößert und verkleinert werden, und zwar auf die folgende Weise: Nimmt das Volumen von Teilkammer 6.1 ab, so nimmt dasjenige von Teilkammer 6.2 im selben Maße zu. Die beteiligten Anschlagflächen 1.6, 5.1 einerseits und 1.7, 5.2 andererseits nähern sich hierbei einander an bzw. entfernen sich voneinander. Bei dieser Relativbewegung ist eine Kraft zu überwinden.

Das bewegliche Nockenteil 1.5.2 weist Stifte 1.5.4 auf - siehe Figur 2. Diese Stifte sind mit ihrem einen Ende im beweglichen Nockenteil 1.5.2 fest verankert, mit ihrem anderen Ende tauchen sie in eine Bohrung im feststehenden Nockenteil 1.5.1 ein. Damit ist das bewegliche Nockenteil 1.5.2 im feststehenden Nockenteil 1.5.1 gelagert. Beim Stande der Technik hingegen ist das bewegliche Nockenteil 1.5.2 in den Seitenscheiben 1.1 und 1.2 gelagert, was viel aufwendiger ist.

Figur 3 zeigt einen ganz ähnlichen Gegenstand wie Figur 2. Jedoch ist hierbei jeweils dem Nocken 2.3 der Mittelscheibe 2 ein Schwimmer zugeordnet, auf den weiter unten noch genauer eingegangen wird, und der zwei in radialer Richtung verlaufende Trennwände 11, 12 aufweist.

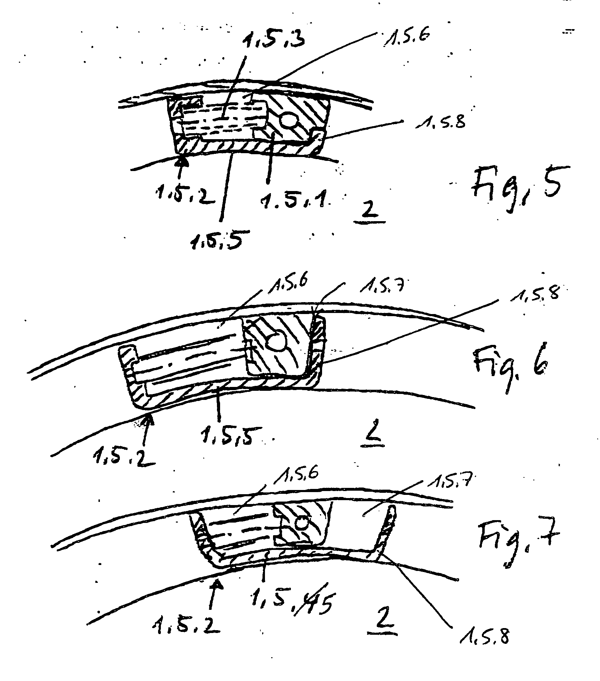

Figur 4 lässt wiederum diesen Schwimmer 10 erkennen, der die beiden Trennwände 11, 12 aufweist, ferner zwei achssenkrechte Wände 13, 14. In Figur 4 befindet sich beidseits des Nockens 2.3 der Mittelscheibe je ein Nocken 1.5, der in den Figuren 5, 6 und 7 gezeigt ist.

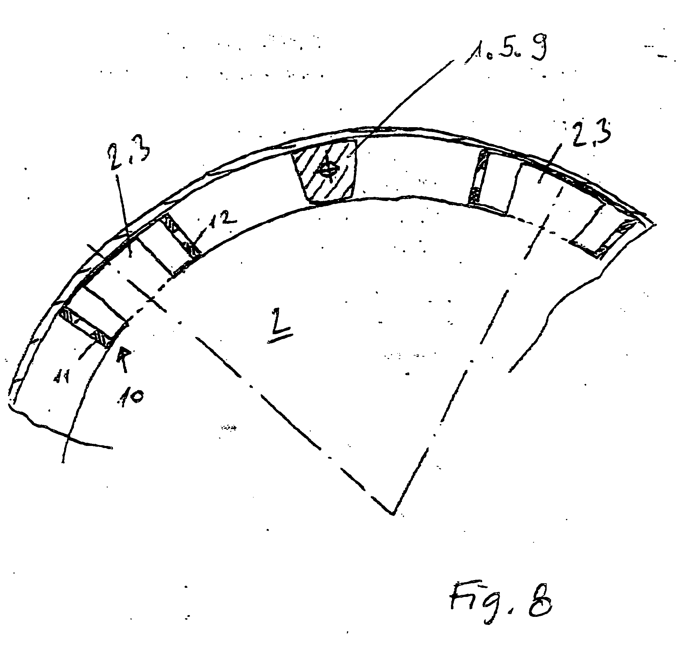

Die Figuren 5 bis 7 zeigen andere Möglichkeiten einer Lagerung des beweglichen Nockenteiles 1.5.2. Wie man aus allen drei Figuren erkennt, ist das bewegliche Nockenteil 1.5.2 mit einer Führungsschiene 1.5.5 versehen und diese umgreift das feststehende Nockenteil 1.5.1 - im Falle der Ausführungsform gemäß Figur 5 etwas weniger, im Falle der Ausführungsform gemäß der Figuren 6 und 7 etwas mehr.

Das bewegliche Nockenteil 1.5.2 dient als Federtopf zur Aufnahme der Feder 1.5.3. Diese ist im vorliegenden Falle eine Druckfeder. Sie könnte auch eine Zugfeder sein, deren eines Ende vom beweglichen Nockenteil 1.5.2, und deren anderes Ende vom feststehenden Nockenteil 1.5.1 gehalten wird. Die Führungsschiene 1.5.5 dient der Lagerung. Hierdurch ist das gesamte bewegliche Nockenteil 1.5.2 am feststehenden Nockenteil 1.5.1 gelagert. Es bedarf somit keiner Lagerung in den Seitenscheiben 1.1 und 1.2 der Kupplung. Wie man sieht, ist die Führungsschiene derart ausgebildet, dass sie wenigstens teilweise das feststehende Nockenteil 1.5.1 umgreift, so dass hierdurch ein Anschlag gebildet wird.

Schließlich bildet die radial innere Fläche der Führungsschiene 1.5.5 mit der Mittelscheibe 2 einen engen Spalt, durch welches Dämpfungsmedium hindurchtreten kann.

Der genannte Nocken 1.5 bildet mit seinen Bauteilen eine weitere Dämpfungskammer 1.5.6, zusammen mit den axial außen liegenden, durch Seitenscheiben oder Gehäuse-/Decke)wandungen gebildeten Axialflächen, sowie den radialen, durch Scheiben oder Gehäuse oder den Nockenbauteilen selbst gebildeten Radialflächen. Wenn die Spalte zwischen den Nockenbauteilen und den die Dämpfungskammer begrenzenden Axial- und Radialflächen entsprechend gering gewählt werden, wird bei der Relativbewegung des beweglichen Nockenteiles 1.5.2 gegenüber dem feststehenden Nockenteil 1.5.1 Dämpfungsarbeit infolge der Verdrängung des Dämpfungsmediums aus der Dämpfungskammer 1.5.6 geleistet.

Eine besonders vorteilhafte Gestaltung zeigen die Figuren 6 und 7. Die Führungsschiene 1.5.5 des beweglichen Nockenteiles 1.5.2 umgreift den feststehenden Nockenteil 1.5.1 mit einer Auskragung 1.5.8, die axial und/oder radial zumindest Teilbereiche des feststehenden Nockenteiles 1.5.1 formschlüssig umschließt. In den Figuren 6 und 7 ist diese Auskragung 1.5.8 so ausgebildet, das die gesamte Kolbenfläche der Dämpfungskammer 6.2 gegenüber dem feststehenden Nockenteil 1.5.1 abgetrennt wird. Dadurch entsteht bei entsprechender Wahl der Spalte eine weitere Dämpfungskammer 1.5.7, die im Falle der Figur 6 ein Kammervolumen von Null hat. Bei einer Relativbewegung der Nockenteile 1.5.1 und 1.5.2 gegeneinander entgegen der Kraft der Feder 1.5.3 wird durch die Verdrängung des Dämpfungsmediums aus der Dämpfungskammer 1.5.6 die Dämpfungskammer 1.5.7 befüllt, so dass bei der Gegenbewegung auf das Dämpfungsmedium in der jetzt befüllten Dämpfungskammer 1.5.7 Dämpfungsarbeit geleistet wird.

Selbstverständlich kann auch bei entsprechender Gestaltung über die dargestellte Bohrung in der Auskragung 1.5.8 (Figuren 6 und 7) die Befüllung der Dämpfungskammer 1.5.8 verbessert werden.

Ebenso ist es möglich, auch in der Kammer 1.5.8 eine Feder 1.5.3 vorzusehen. Andererseits kann auch auf die Feder 1.5.3 ganz verzichtet werden, wenn nur die Dämpfung in einem gewissen Verdrehwinkelbereich verstärkt, nicht aber die Federkennlinie verändert werden soll.

Wenn hier von "Führungsschiene" die Rede ist, so ist dies im weitesten Sinne zu verstehen. So kann statt des hier dargestellten, streifenförmigen Bauteiles 1.5.5 auch eine komplette Hülse vorgesehen sein, die somit zumindest die Feder 1.5.3 vollständig umschließt, aber auch zumindest einen Teil des feststehenden Nockenteiles 1.5.1. Es kann auch radial außen ein Streifen vorgesehen sein, analog dem Streifen 1.5.5, so wie in den Figuren 5 bis 7 dargestellt. Auch können zwei Streifen vorgesehen sein, die an den beiden Seiten angeordnet sind, somit in einem gewissen gegenseitigen axialen Abstand voneinander.

Wie in Figur 1 dargestellt, umfasst Nocken 1.5 mehrere Einzelteile. Die Figuren 5, 6, 7 zeigen demgegenüber eine alternative Ausführungsform, die sich kostengünstig herstellen und montieren lässt.

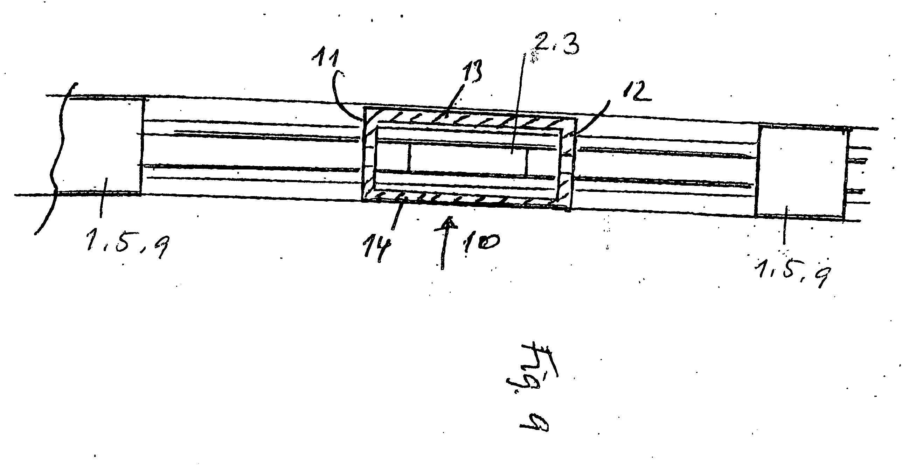

Bei der Darstellung gemäß Figur 8 erkennt man statt des Nockens 1.5 gemäß der Figuren 5, 6 und 7 einen einfachen Anschlagnocken 1.5.9. Dieser ist mit dem Gehäuse fest verbunden. Er kann aber auch alternativ hierzu einteilig sein mit einer der Seitenscheiben, die die Dämpfungskammern 6.1, 6.2 begrenzen, dem Gehäuse oder einem Deckel, sowie als Nocken 1.5.10 in Figur 14 gezeigt.

Bei den Ausführungsformen der Figuren 8 bis 13b geht es um jene Nocken 2.3, die der Mittelscheibe 2 zugeordnet sind. Diesen Nocken sind Schwimmer 10 zugeordnet. Dabei erkennt man in Figur 8 einen Schwimmer 10. Dieser befindet sich im Dämpfungskammer. Der Schwimmer 10 hat Trennwände 11 und 12. Sie erstrecken sich in radialer Richtung durch den Dämpfungsraum hindurch und sperren diese somit mehr oder minder ab. Wie man sieht, weisen sie beide eine Bohrung auf. Die Funktion dieser Bohrungen ist in DE 197 50 408 beschrieben. Die Bohrungen werden derart bemessen, dass die optimale Menge Dämpfungsmedium in diejenige Kammer zurückströmt, die bei der zuvor stattgefundenen Relativbewegung verdrängt wurde.

Die in Figur 9 gezeigte Abwicklung der Umfangsfläche des Gegenstandes von Figur 8 zeigt wiederum einen Nocken 2.3 der der Mittelscheibe 2 zugeordnet ist, ferner 2 beidseits angeordnete Anschlagnocken 1.5.9. Wie man hieraus erkennt, hat der Schwimmer 10 Kastenprofil.

Die beiden Trennwände 11, 12 sind durch ein irgendwie geartetes Bauteil miteinander starr verbunden, so dass sie stets ein- und denselben gegenseitigen Abstand aufweisen. Das Verbindungsmittel kann beispielsweise ein Stab sein, der sich von der einen Trennwand zur anderen erstreckt und beispielsweise durch den Nocken 2.3 hindurchgeführt ist. Es kann sich aber auch um einen Blechstreifen handeln, der sich an irgendeiner der vier Seiten befindet, somit beispielsweise in einem axialen gegenseitigen Abstand im Bereich der Seitenscheiben, oder radial innen, oder radial außen. Auch ein einziger Streifen reicht aus. Vorteilhafterweise ist der Schwimmer komplett aus einem elastomeren, duroplastischen oder thermoplastischen Kunststoff hergestellt, zum Beispiel im Spritzgussverfahren.

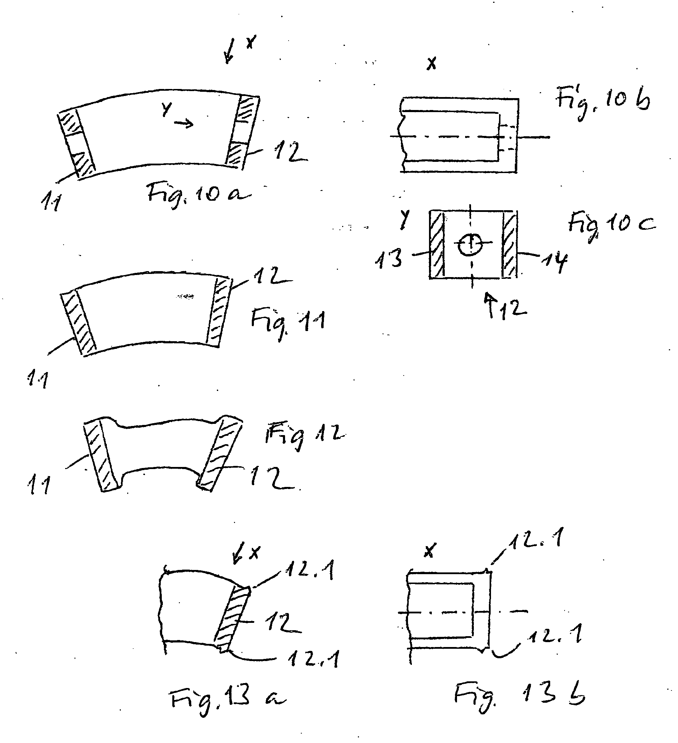

Bei der Darstellung gemäß Figur 10 besteht der genannte Schwimmer 10 aus den beiden genannten Trennwänden 11 und 12, ferner aus Längswänden 13, 14, die einen gewissen gegenseitigen axialen Abstand aufweisen und die sich parallel zu den Seitenscheiben 1.1, 1.2 erstrecken. In diesem Falle hat der Schwimmer den Charakter einer Hülse.

Die weiteren Schwimmerdarstellungen sind in den Figuren 10a bis 13b erkennbar. In allen vier Fällen handelt es sich um einen Schwimmer mit Hülsenform.

Bei der Ausführungsform gemäß der Figuren 10a bis 10c sieht man, dass die Trennwände 11, 12 mit Bohrungen versehen sind. Außerdem sind Längswände 13, 14 erkennbar.

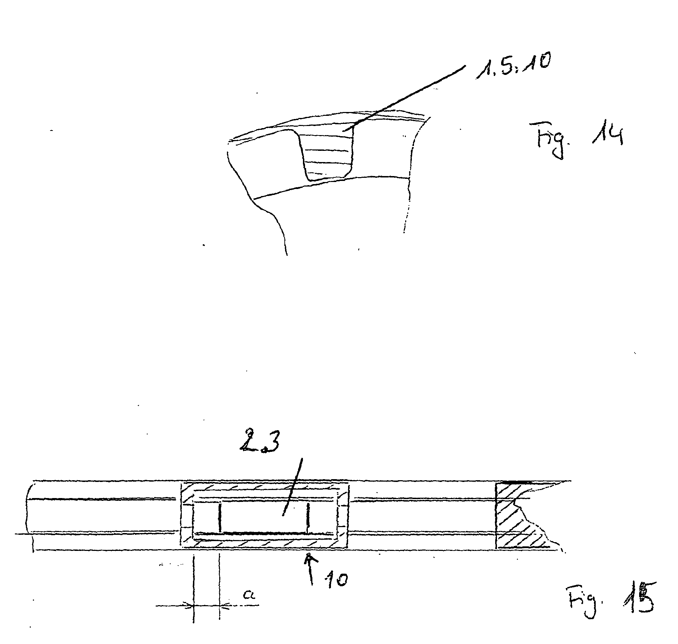

Alternativ zur Figur 10 zeigt Figur 11 eine Ausführungsform, bei der die Trennwände 11, 12 frei von Bohrungen sind.

Grundsätzlich kann jede Ausführungsform der Figuren 10 bis 13, 17 und 18 zum Verbessern des Füllungsverhaltens der Dämpfungskammern 6.1 und 6.2 Bohrungen aufweisen.

Bei der Ausführungsform gemäß Figur 12 sind die Längswände 13, 14 im Bereich des Mittelscheibennockens 2.3 radial eingeschnürt.

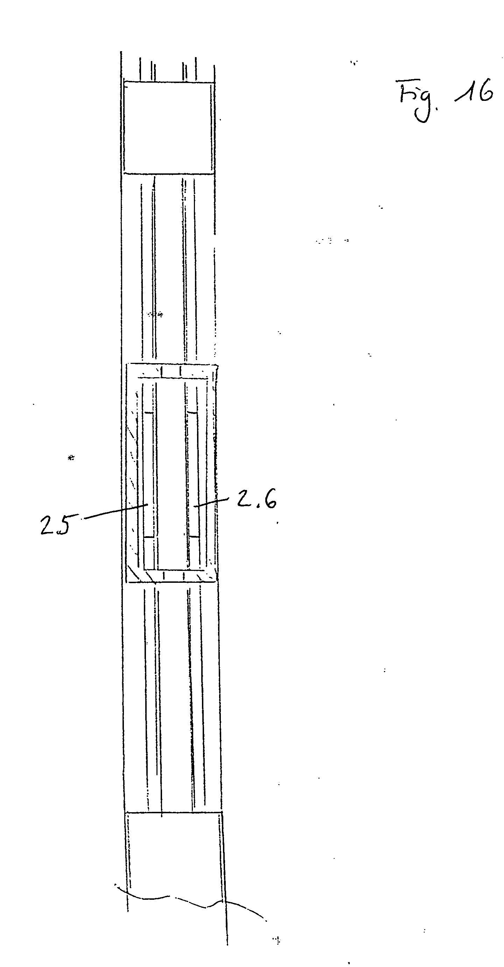

Bei der Ausführungsform gemäß der Figuren 13a und 13b sind die Trennwände 11, 12 (hier nur 12 dargestellt) jeweils mit einer Dichtlippe 12.1 versehen.

In Figur 14 erkennt man wiederum einen Nocken 1.5.10, der am Gehäuse fixiert ist.

Figur 15 lässt einen Nocken 2.3 erkennen, der der Mittelscheibe 2 zugeordnet ist. Der Nocken 2.3 ist wieder von einem Schwimmer 10 umgeben.

Man erkennt das Maß a. Bei der dargestellten Ausführungsform befindet sich der Nocken 2.3 in einer Mittelstellung, bezogen auf den Schwimmer 10.

Das Maß kennzeichnet einen sogenannten Freihubbereich, in dem die hydraulische Dämpfungseinrichtung von der Mittelscheibe entkoppelt ist. Solange die Schwingungsamplitude der Relativdrehwinkel zwischen Kupplungsprimär- und sekundärseite innerhalb des Maßes a ist, wird das hydraulische Dämpfungssystem nicht aktiviert und man erreicht eine gute Schwingungsentkupplung und Isolation von Primär- und Sekundärseite.

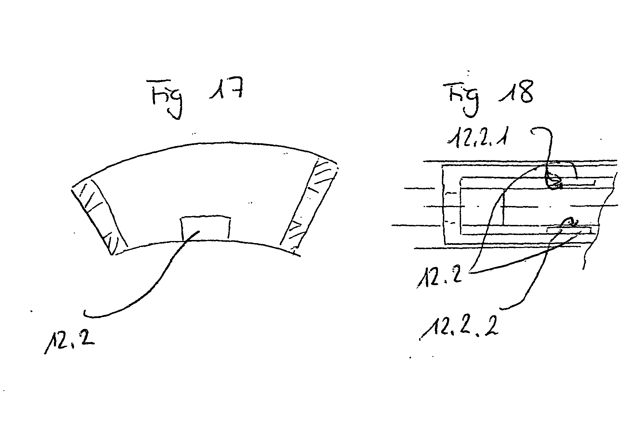

Bei der in Figur 16 dargestellten Ausführungsform erkennt man zwei Nocken 2.5, 2.6. Diese befinden sich auf einer Zentralscheibe, statt auf der Mittelscheibe. Die hydraulische Dämpfung wirkt hierbei nur in bestimmten Verdrehwinkelbereichen, da die Mittelscheibe (abhängig von der Anordnung der Federfenster in Mittelscheibe, Zentralscheibe und Seitenscheiben) in einigen Winkelbereichen unabhängig von der Bewegung der Zentralscheiben, die über die Nocken die hydraulische Dämpfung steuern, ist.

Die Figuren 17 und 18 zeigen eine weitere vorteilhafte Ausführungsform. Hier sind axial wirkende Führungsvorsprünge beziehungsweise Führungsflächen 12.2.1 sowie 12.2.2 im axial innenliegenden Bereich der Längswände 13, 14 angeordnet, dort wo die Nocken der Mittelscheiben 2 oder der Zentralscheiben (Figur 16) vorgesehen sind. Figur 18 zeigt solche Führungsvorsprünge 12.2 mit Führungsflächen 12.2.1 und 12.2.2 für eine Ausführungsform gemäß Figur 15. Mit den genannten Führungsvorsprüngen können die Mittelscheibe (Figur 9 und Figur 15) oder die Zentralscheiben (Figur 16) auf einem optimalen axialen Abstand von den benachbarten Scheiben und/oder dem Gehäuse/Deckel eingestellt werden. Ebenso werden natürlich auch die Schwimmer ihrerseits mittels der Führungsvorsprünge und -flächen durch die Nocken 2.3 derart geführt, dass kein zu hoher Verschleiß auftreten kann.

Den vorgestellten Ausführungsformen zum Schwimmer 1 ist gemeinsam, dass zur Erreichung einer bestimmten Dämpfung entsprechende Spaltmaße einzustellen sind.
Im Allgemeinen stellt man zwischen dem Schwimmer und den Nocken 2.3 große Spaltmaße (axial und/oder radial) ein, damit man wie im Zusammenhang mit dem Maße nach Figur 15 erläutert, eine gute Isolation und Entkopplung erreicht. Zwischen den Trennwänden 11 und 12, in einigen Fällen und zwischen den Längswänden 13 und 14, und den durch Mittelscheiben, Zentralscheiben, Gehäuse und/oder Deckel gebildeten Dämpfungskammerwänden werden enge Spalte zur Erzielung einer Dämpfungsarbeit angeordnet, wobei diese Spaltmaße durch Rücksprünge in bestimmten Winkelbereichen variiert werden können.

Eine interessante Ausführungsform besteht in folgendem:
Der in den Figuren 8 bis 13b dargestellte Schwimmer kann auch dem am Gehäuse vorgesehenen Nocken 1.5 zugeordnet werden. Dabei hat der Schwimmer die gleiche Funktion, wie das in den Figuren 5 bis 7 gezeigte bewegliche Nockenteil 1.5.2. Die eine Trennwand des Schwimmers dient somit als Federtopf, und die andere Trennwand zum Anschlagen an der gegenüberliegenden Seite des feststehenden Nockenteiles 1.5.1.

Eine solche Ausführungsform hat große Herstellungsvorteile. Es kann nämlich einund dasselbe Bauteil an zwei Stellen der Kupplung verwendet werden, nämlich einmal kann es dem Nocken 2.3 der Mittelscheibe, und zum anderen dem Nocken 1.5 des Gehäuses zugeordnet werden. Damit lässt sich die Stückzahl des Bauteiles erhöhen, was zu einer Fertigungsrationalisierung führt.

Die beiden genannten Seitenscheiben 1.1 und 1.2 können aus Gehäusewänden gebildet sein. Es bedarf somit hierfür nicht besonderer Scheiben.

Eine erfindungsgemäße Kupplung erfüllt ihre Funktionen in perfekter Weise. Während einer ersten Phase der relativen Verdrehung der beiden Kupplungshälften 1, 2 ist der Verdrehwiderstand zufolge des in der Dämpfungskammer eingeschlossenen Fettes relativ gering, so dass ein Entkoppeln von Motor und Getriebe stattfindet. In einer zweiten Phase hingegen ist der Verdrehwiderstand relativ groß. Diese beiden Erscheinungen lassen sich durch entsprechende Dimensionierung der Spaltweiten erreichen

## Patentansprüche

1. Elastische Kupplung in Scheibenbauweise, insbesondere ein Torsionsschwingungsdämpfungssystem für eine Brennkraftmaschine, mit den folgenden Merkmalen:
1.1 eine erste Kupplungshälfte (1) umfasst zwei am Außenumfang drehfest verbundene Seitenscheiben (1.1, 1.2);
1.2 eine zweite Kupplungshälfte (2) ist durch mindestens eine einer Nabe zugeordnete Scheibe (Mittelscheibe 2) gebildet, die zwischen den Seitenscheiben (1.1, 1.2) von diesen umhüllt angeordnet ist;
1.3 beide Kupplungshälften (1, 2) sind begrenzt gegeneinander verdrehbar und über elastische Kupplungselemente (4) miteinander verbunden;
1.4 die Seitenscheiben (1.1, 1.2) begrenzen einen die Mittelscheibe (2) aufnehmenden, flüssigkeitsdichten Innenraum;
1.5 im radial äußeren Bereich des Innenraumes befindet sich wenigstens eine mit Dämpfungsmedium füllbare und eine Drosselöffnung aufweisende Dämpfungskammer;
1.6 die Dämpfungskammer ist in Umfangsrichtung begrenzt durch erste Nocken (2.3), die der einen Kupplungshälfte zugeordnet sind, sowie durch einen zweiten Nocken (1.5), der der anderen Kupplungshälfte zugeordnet ist;
1.7 der zweite Nocken (1.5) unterteilt die Dämpfungskammer in zwei Teilkammern (6.1, 6.2), deren Volumina sich beim gegenseitigen Verdrehen der Kupplungshälften abwechselnd derart verändern, dass sich das Volumen der einen Teilkammer vergrößert, während sich das Volumen der anderen Teilkammer verkleinert;
1.8 wenigstens einer (1.5) der Nocken ist in ein feststehendes Nockenteil (1.5.1) und ein in Umfangsrichtung verschiebbares, die betreffende Teilkammer (6.1) begrenzendes Nockenteil (1.5.2) unterteilt;
1.9 das in Umfangsrichtung verschiebbare Nockenteil (1.5.2) ist entgegen der Kraft einer Feder (1.5.3) verschiebbar;
1.10 zwischen den beiden Nockenteilen (1.5.1) und (1.5.2) ist eine dritte Teilkammer (6.3) der Dämpfungskammer gebildet, die die Feder (1.5.3) aufnimmt;
1.11 das verschiebbare Nockenteil (1.5.2) ist als Federtopf ausgebildet; **gekennzeichnet durch** die folgenden Merkmale:
1.12 das verschiebbare Nockenteil (1.5.2) ist am feststehenden Nockenteil (1.5.1) gelagert.

2. Elastische Kupplung in Scheibenbauweise, insbesondere ein Torsionsschwingungsdämpfungssystem für eine Brennkraftmaschine, mit den folgenden Merkmalen:
2.1 eine erste Kupplungshälfte (1) umfasst zwei am Außenumfang drehfest verbundene Seitenscheiben (1.1, 1.2);
2.2 eine zweite Kupplungshälfte (2) ist durch mindestens eine einer Nabe zugeordnete Scheibe (Mittelscheibe 2) gebildet, die zwischen den Seitenscheiben (1.1, 1.2) von diesen umhüllt angeordnet ist;
2.3 beide Kupplungshälften (1, 2) sind begrenzt gegeneinander verdrehbar und über elastische Kupplungselemente (4) miteinander verbunden;
2.4 die Seitenscheiben (1.1, 1.2) begrenzen einen die Mittelscheibe (2) aufnehmenden, flüssigkeitsdichten Innenraum;
2.5 im radial äußeren Bereich des Innenraumes befindet sich wenigstens eine mit Dämpfungsmedium füllbare und eine Drosselöffnung aufweisende Dämpfungskammer;
2.6 die Dämpfungskammer ist in Umfangsrichtung begrenzt durch erste Nocken (2.3), die der einen Kupplungshälfte zugeordnet sind, sowie durch einen zweiten Nocken (1.5), der der anderen Kupplungshälfte zugeordnet ist;
2.7 der zweite Nocken (1.5) unterteilt die Dämpfungskammer in zwei Teilkammern (6.1, 6.2), deren Volumina sich beim gegenseitigen Verdrehen der Kupplungshälften abwechselnd derart verändern, dass sich das Volumen der einen Teilkammer vergrößert, während sich das Volumen der anderen Teilkammer verkleinert;
2.8 wenigstens einer (1.5) der Nocken ist in ein feststehendes Nockenteil (1.5.1) und ein in Umfangsrichtung verschiebbares, die betreffende Teilkammer (6.1) begrenzendes Nockenteil (1.5.2) unterteilt;
2.9 das in Umfangsrichtung verschiebbare Nockenteil (1.5.2) ist entgegen der Kraft einer Feder (1.5.3) verschiebbar;
2.10 zwischen den beiden Nockenteilen (1.5.1 ) und (1.5.2) ist eine dritte Teilkammer (6.3) der Dämpfungskammer gebildet, die die Feder (1.5.3) aufnimmt;
2.11 das verschiebbare Nockenteil (1.5.2) ist als Federtopf ausgebildet; **gekennzeichnet durch** die folgenden Merkmale:
2.12 das verschiebbare Nockenteil (1.5.2) ist am feststehenden Nockenteil (1.5.1 ) gelagert.

3. Kupplung nach Ansprüchen 1 oder 2, **dadurch gekennzeichnet, dass** eines der beiden Nockenteile eine Führungsschiene (1.5.5) trägt, an der das andere Nockenteil bei der Relativbewegung der beiden Nockenteile in Umfangsrichtung gleitet.

4. Kupplung nach Ansprüchen 1 oder 2, **gekennzeichnet durch** die folgenden Merkmale:
4.1 die Führungsschiene (1.5.5) ist dem verschiebbaren Nockenteil (1.5.2) zugeordnet;
4.2 die Führungsschiene (1.5.5) begrenzt die dritte Teilkammer (6.3) der Dämpfungskammer wenigstens auf einem Teil ihres Umfangs.

5. Kupplung nach Anspruch 3, **dadurch gekennzeichnet, dass** die Führungsschiene (1.5.5) die dritte Teilkammer (6.3) der Dämpfungskammer radial innen oder radial außen oder an einer oder an beiden Seiten begrenzt.

6. Kupplung nach einem der vorhergehenden Ansprüche, **dadurch gekennzeichnet, dass** das verschiebbare Nockenteil 1.5.2 so ausgebildet ist, dass zwischen dem feststehenden Nockenteil 1.5.1 und dem verschiebbaren Nockenteil 1.5.2 in Umfangsrichtung gesehen beidseits des feststehenden Nockenteils 1.5.1 eine dritte und vierte Teilkammer der Dämpfungskammer gebildet wird.

7. Kupplung nach Anspruch 6, **dadurch gekennzeichnet, dass** die dritte und vierte Teilkammer jeweils mindestens 1 Feder aufnehmen
